# EUROPÄISCHE PATENTSCHRIFT

(11) **EP 4 387 879 B1**
(45) Veröffentlichungstag und Bekanntmachung des Hinweises auf die Patenterteilung: **18.11.2026**
(21) Anmeldenummer: 22762068.9
(22) Anmeldetag: 09.08.2022
(51) Int. Cl.: B60W 40/06

(54) **VERFAHREN UND VORRICHTUNG ZUM ERMITTELN UND CHARAKTERISIEREN VON FAHRBAHNUNEBENHEITEN**
PROCESS AND DEVICE FOR DETERMINING AND CHARACTERIZING ROAD SURFACE IRREGULARITIES
PROCÉDÉ ET DISPOSITIF POUR DÉTERMINER ET CARACTÉRISER LES IRRÉGULARITÉS DE LA SURFACE DE LA ROUTE

(30) Priorität: 19.08.2021 DE 102021209131
(43) Veröffentlichungstag der Anmeldung: 26.06.2024
(73) Patentinhaber: Robert Bosch GmbH, 70442 Stuttgart (DE)
(72) Erfinder: HOFFMANN, Andreas, 74182 Obersulm (DE); SUNKARA, Devi Raj, Bangalore, Karnataka 560062 (IN); SCHEUING, Jan, 74541 Vellberg (DE)
(86) Internationale Anmeldenummer: PCT/EP2022/072372
(87) Internationale Veröffentlichungsnummer: WO 2023/020898

(56) Entgegenhaltungen:
- EP-A1- 3 309 033
- EP-A2- 1 582 382
- DE-A1- 102007 037 513
- DE-A1- 102013 225 586
- DE-A1- 102014 214 729
- DE-A1- 102015 010 576
- DE-C1- 4 329 745
- US-A1- 2015 314 663
- US-A1- 2021 012 131

## Beschreibung

Die vorliegende Erfindung betrifft ein Verfahren und eine Vorrichtung zum Ermitteln und Charakterisieren von Fahrbahnunebenheiten.

### Stand der Technik

Fahrbahnunebenheiten, etwa in Form von Schlaglöchern, treten häufig auf und stellen ein Sicherheitsrisiko für Kraftfahrzeuge dar. Wie groß das Sicherheitsrisiko ist, hängt hauptsächlich von Form und Größe der Fahrbahnunebenheiten ab. Zweiradfahrer gelten besonders als Gefährdungsgruppe. Außerdem verursachen Fahrbahnunebenheiten auch Unannehmlichkeiten für die Fahrer und Passagiere in den Kraftfahrzeugen. Es fehlen jedoch zuverlässige und regionalspezifische Daten über das Vorliegen und die Art solcher Fahrbahnunebenheiten. Eine Erstellung von Gefahrenkarten wird etwa in der DE 10 2010 055370 A1 beschrieben. Aus der US 2021/012131 A1 ist ein Verfahren zur Korrektur von Straßenoberflächeninformationen bekannt. Die US 2015/314663 A1 offenbart eine Bestimmung einer Straßenrauheit. Die DE 10 2014 214729 A1 betrifft die Schlaglocherkennung. Die DE 43 29 745 C1 betrifft ein Verfahren zur frühzeitigen Erfassung von unerwarteten gefährlichen Fahrbahnverhältnissen. Die EP 1 582 382 A2 offenbart eine Vorrichtung zur Erkennung einer Anlage zur Warnung vor dem Verlassen der Straße. Die DE 10 2007 037513 A1 betrifft eine Vorrichtung zur Fahrzeugsteuerung. Die EP 3 309 033 A1 betrifft die Bestimmung von Straßeneigenschaften. Die DE 10 2015 010576 A1 betrifft die Feststellung von Straßenoberflächenunregelmäßigkeiten. Die DE 10 2013 225586 A1 betrifft die Bewertung der Fahrbahnbeschaffenheit.

Zur Erkennung, Schätzung und Kartierung von Fahrbahnunebenheiten können Sensordaten von Lidar-, Radar- oder Kamerasensoren herangezogen werden. Mittels Erkennungs- und Schätzungsverfahren werden Straßenschäden erkannt, wobei die Verfahren maschinelle Lernalgorithmen umfassen können, die Bild- und Videodaten als Eingabe erhalten.

Die dabei verwendeten Sensoren erfüllen jedoch häufig nicht den ASIL-D-Standard (Automotive Safety Integration Level - D). Weiter ist der Anteil der Kraftfahrzeuge, die mit derartigen Sensoren ausgestattet sind, eher gering.

Weiter sind maschinelle Lernalgorithmen zur Erkennung und Einschätzung von Schlaglöchern anfällig für falsch-positive und falsch-negative Ergebnisse. Darüber hinaus verbrauchen die Algorithmen beträchtliche Rechenzeit-Ressourcen.

### Offenbarung der Erfindung

Die Erfindung stellt ein Verfahren und eine Vorrichtung zum Ermitteln und Charakterisieren von Fahrbahnunebenheiten mit den Merkmalen der unabhängigen Patentansprüche bereit. Bevorzugte Ausführungsformen sind Gegenstand der abhängigen Patentansprüche.

Gemäß einem ersten Aspekt betrifft die Erfindung demnach ein Verfahren zum Ermitteln und Charakterisieren von Fahrbahnunebenheiten einer Fahrbahn gemäß Anspruch 1.

Gemäß einem zweiten Aspekt betrifft die Erfindung eine Vorrichtung zum Ermitteln und Charakterisieren von Fahrbahnunebenheiten einer gemäß Anspruch 13.

### Vorteile der Erfindung

Die Erfindung ermöglicht es, die Häufigkeit und optional auch die Schwere bzw. das Ausmaß (z.B. eine relative Tiefe und Länge eines Schlaglochs) von Fahrbahnunebenheiten zu erkennen und zu analysieren, und kann dazu beitragen, eine umfassende Datenbank der Fahrbahnunebenheiten zu erstellen.

Moderne Kraftfahrzeuge verfügen über mehrere Sensoren, deren Daten von eingebetteten Systemen oder Kraftfahrzeugcomputern aus Sicherheits- und Komfortgründen genutzt werden. Raddrehzahlsensoren gehören zu den am häufigsten verwendeten Sensoren.

Hochfrequenz-Raddrehzahlsensoren liefern Informationen über den genauen Zustand des Rades. Diese Sensoren gehören auch zu den wenigen Sensoren, die den ASIL-D-Standard erfüllen, sodass sie im Vergleich zu anderen Sensoren sehr zuverlässig sind.

Weiter sind Raddrehzahlsensoren sehr weit verbreitet Darüber hinaus sind die Raddrehzahlsensoren diejenigen Sensoren, welche der Fahrbahn am nächsten sind, da sie direkt am Rad angebracht sind. Dadurch ergibt sich eine hohe Zuverlässigkeit aufgrund der Nähe der Sensoren zur Straßenoberfläche. Speziell eine Kombination aus Raddrehzahlsensor und Beschleunigungssensor am Rad ist hier vorteilhaft.

Bei dem Kraftfahrzeug kann es sich um ein Zweirad, Dreirad, einen Personenkraftwagen, Lastkraftwagen, ein Motorrad oder dergleichen handeln. Das Kraftfahrzeug kann beispielsweise auch ein Flugzeug sein, etwa um Schäden einer Start- und Landebahn zu erkennen.

Unter einem Ermitteln der Fahrbahnunebenheit kann insbesondere verstanden werden, dass das Vorhandensein der Fahrbahnunebenheit erkannt wird. Unter einem Charakterisieren kann darüber hinaus verstanden werden, dass zusätzliche Eigenschaften (über das bloße Vorhandensein hinaus) ermittelt werden.

Im Rahmen dieser Erfindung können Fahrbahnunebenheiten Straßenschäden umfassen, etwa Schlaglöcher, Vertiefungen oder Erhöhungen, Spurrillen, jedoch auch gewollte Fahrbahnunebenheiten, etwa Geschwindigkeitsschwellen, Rampen und Ähnliches.

Bei dem Beschleunigungssensor kann es sich um einen fahrzeugfesten Inertialsensor handeln, welcher also nicht an beweglichen Komponenten angeordnet ist Der Beschleunigungssensor kann jedoch auch ein radindividueller Beschleunigungssensor sein, welcher also an einem Rad angebracht ist und sich mit diesem mitbewegt. Für jedes Rad kann ein entsprechender radindividueller Beschleunigungssensor vorgesehen sein.

Die Recheneinrichtung liegt bevorzugt nahe der Datenquelle bzw. der Sensorik, z.B. integriert in einem Steuergerät eines Bremsregelsystems, um die Sensorwerte möglichst ungefiltert verarbeiten zu können.

Erfindungsgemäß erfasst der Raddrehzahlsensor etwa anhand eines Hallsensors in Abhängigkeit von einer Bewegung eines an einem Rad des Kraftfahrzeugs angeordneten Impulsrades Impulse. Die Recheneinrichtung ermittelt anhand von Änderungen der erfassten Impulse in Abhängigkeit von der Zeit, das heißt anhand der vom Impulsrad ausgehenden Rohsignale der sich abwechselnden magnetischen Feldern (Nord / Süd), einen winkelförmigen Verlauf einer hochfrequenten Raddrehzahl. Unter einem winkelförmigen Verlauf der Raddrehzahl ist dabei die Änderung der Raddrehzahl in Abhängigkeit von dem Winkel zu verstehen. Dies kann mittels Ermittlung der Zeitdifferenz zwischen den einzelnen Impulsen erfolgen. Die Recheneinrichtung erkennt die Fahrbahnunebenheiten anhand des ermittelten winkelförmigen Verlaufs der Raddrehzahl. So führen Fahrbahnunebenheiten meist zu einer kurzfristigen Änderung der Raddrehzahl, da das Rad des Kraftfahrzeugs beim Befahren der Fahrbahnunebenheit beschleunigt oder verlangsamt wird. Dasselbe gilt beim Verlassen der Fahrbahnunebenheit. Durch Erkennen dieser Änderung der Raddrehzahl kann die Recheneinrichtung die Fahrbahnunebenheit ermitteln. Im Vergleich zu einem zeitlichen Verlauf der Raddrehzahl bietet der winkelförmige Verlauf, welcher sich aus den Impulswechsel über der Zeit ergibt, deutliche Vorteile hinsichtlich Präzision von kleinen Änderungen in der Fahrbahnoberflächenbeschaffenheit. Beispielsweise kann vorgesehen sein, die Anzahl von Impulsen in einem Zeitraum von einer vorgegebenen Dauer, beispielsweise von kleiner oder gleich 1 ms, zu ermitteln. Das Verarbeiten der Sensorrohsignale in der Recheneinrichtung ermöglicht die Erkennung und präzise Vermessung von bereits geringfügigen Änderungen in der Fahrbahnoberflächenbeschaffenheit.

Gemäß einer weiteren Ausführungsform des Verfahrens zum Ermitteln und Charakterisieren von Fahrbahnunebenheiten ermittelt die Recheneinrichtung Fahrbahnunebenheiten, falls ein Betrag einer winkelförmigen Änderung der Raddrehzahl einen Schwellenwert überschreitet Der Schwellenwert kann dabei von einer Kraftfahrzeuggeschwindigkeit abhängen.

Gemäß einer weiteren Ausführungsform des Verfahrens zum Ermitteln und Charakterisieren von Fahrbahnunebenheiten berechnet die Recheneinrichtung anhand der von dem Raddrehzahlsensor erzeugten Sensordaten ein Frequenzverhalten der Raddrehzahl, wobei die Recheneinrichtung die Fahrbahnunebenheiten anhand des berechneten Frequenzverhaltens der Raddrehzahl ermittelt So kann eine Fahrbahnunebenheit ermittelt werden, falls mindestens eine vorgegebene Frequenz im Frequenzverhalten auftritt. Das Frequenzverhalten kann auch mit vorgegebenen Frequenzmustern abgeglichen werden, um eine Fahrbahnunebenheit zu ermitteln.

Gemäß einer weiteren Ausführungsform des Verfahrens zum Ermitteln und Charakterisieren von Fahrbahnunebenheiten bestimmt die Recheneinrichtung weiter eine Art und/oder Beschaffenheit der Fahrbahnunebenheiten anhand der Sensordaten. Eine Art der Fahrbahnunebenheit kann etwa ein Schlagloch, eine Vertiefung, eine Erhöhung, eine Geschwindigkeitsschwelle, Rampe oder dergleichen sein. Unter einer Beschaffenheit der Fahrbahnunebenheit kann eine räumliche Ausdehnung verstanden werden, etwa eine Tiefe, Breite und Länge eines Schlaglochs.

Gemäß einer weiteren Ausführungsform des Verfahrens zum Ermitteln und Charakterisieren von Fahrbahnunebenheiten umfasst das Charakterisieren der Fahrbahnunebenheit das Ermitteln einer Tiefe und/oder Höhe (z.B. in Zentimeter) der Fahrbahnunebenheit anhand einer Amplitude einer Änderung der Raddrehzahl. Die Amplitude der sich in diesem Moment ändernden hochfrequenten Raddrehzahl entspricht der Tiefe bzw. Höhe einer Fahrbahnunebenheit.

Gemäß einer weiteren Ausführungsform des Verfahrens zum Ermitteln und Charakterisieren von Fahrbahnunebenheiten erfasst der Raddrehzahlsensor in Abhängigkeit von einer Bewegung eines an einem Rad des Kraftfahrzeugs angeordneten Impulsrades Impulse, wobei das Charakterisieren der Fahrbahnunebenheit das Ermitteln einer Länge der Fahrbahnunebenheit anhand einer Anzahl von Änderungen der Impulse im Zeitraum zwischen Befahren und Verlassen der Fahrbahnunebenheiten umfasst.

Gemäß einer weiteren Ausführungsform des Verfahrens zum Ermitteln und Charakterisieren von Fahrbahnunebenheiten erfassen der fahrzeugfeste Inertialsensor und/oder die radindividuellen Beschleunigungssensoren eine Vertikalbeschleunigung, wobei das Charakterisieren der Fahrbahnunebenheit das Ermitteln einer Tiefe oder Höhe der Fahrbahnunebenheit anhand der ermittelten Vertikalbeschleunigung umfasst. Insbesondere kann eine Änderung der Vertikalbeschleunigung gemessen werden und das Ermitteln der Tiefe und/oder Höhe der Fahrbahnunebenheit erfolgt anhand der Amplitude der Änderung der von dem mindestens einen Beschleunigungssensor gemessenen Vertikalbeschleunigung. Die Amplitude der Änderung der Vertikalbeschleunigung entspricht der Tiefe bzw. Höhe der Fahrbahnunebenheit Durch Vergleich der Amplitude der Änderung der Vertikalbeschleunigung mit einem oder mehreren Schwellenwerten kann zwischen verschiedenen Tiefen bzw. Höhen unterschieden werden.

Gemäß einer weiteren Ausführungsform des Verfahrens zum Ermitteln und Charakterisieren von Fahrbahnunebenheiten erfolgt das Charakterisieren der Fahrbahnunebenheit anhand der Sensordaten des mindestens einen Raddrehzahlsensors. Ein Ergebnis des Charakterisierens der Fahrbahnunebenheit wird anhand der Sensordaten des mindestens einen Beschleunigungssensors plausibilisiert Die Ergebnisse des Raddrehzahlsensors sind typischerweise sehr genau. Insbesondere kann die Länge durch Ermitteln der Anzahl der Impulse zwischen Befahren und Verlassen der Fahrbahnunebenheit noch genauer bestimmt werden als über eine Berechnung über die Fahrzeuggeschwindigkeit. Die Daten des mindestens einen Beschleunigungssensors können jedoch herangezogen werden, um die Ergebnisse anhand des Raddrehzahlsensors zu plausibilisieren, etwa indem eine unabhängige Erkennung und/oder Charakterisierung der Fahrbahnunebenheit durchgeführt wird.

Gemäß einer weiteren Ausführungsform des Verfahrens zum Ermitteln und Charakterisieren von Fahrbahnunebenheiten umfasst das Ermitteln der Fahrbahnunebenheit das Ermitteln einer Position der Fahrbahnunebenheit relativ zu einem Referenzpunkt des Kraftfahrzeugs anhand einer ermittelten Kurvenfahrt und/oder Einzelradauswertung (etwa mittels radindividueller Beschleunigungssensoren und/oder Raddrehzahlsensoren). Dadurch kann die Breite der Fahrbahnunebenheit bestimmt werden.

Gemäß einer weiteren Ausführungsform des Verfahrens zum Ermitteln und Charakterisieren von Fahrbahnunebenheiten können für verschiedene Arten und/oder Beschaffenheiten der Fahrbahnunebenheiten Frequenzmuster der Raddrehzahlamplituden und der Anzahl der Impulsänderungen in einem bestimmten Zeitraum hinterlegt werden, welche etwa bei Testfahrten unter vorgegebenen Bedingungen generiert werden. Durch Vergleich des momentanen ermittelten Frequenzmusters oder Amplitudenausschlages mit den hinterlegten Frequenzmustern oder Schwellen kann dann Art und/oder Beschaffenheit der Fahrbahnunebenheit ermittelt werden.

Gemäß einer weiteren Ausführungsform des Verfahrens zum Ermitteln und Charakterisieren von Fahrbahnunebenheiten kann die Tiefe der Fahrbahnunebenheit, etwa eines Schlaglochs, ermittelt werden, indem die Amplitude des Gradienten, d. h. der zeitlichen Veränderung der Raddrehzahl betrachtet wird. Je größer die Amplitude, desto tiefer das Schlagloch. Anhand einer vorgegebenen Abhängigkeit, etwa einer Look-up-Tabelle, kann anhand der zeitlichen Veränderung der Raddrehzahl die Tiefe der Fahrbahnunebenheit ermittelt werden. Dabei können auch weitere Parameter, etwa die momentane Geschwindigkeit des Kraftfahrzeugs berücksichtigt werden.

Gemäß einer weiteren Ausführungsform des Verfahrens zum Ermitteln und Charakterisieren von Fahrbahnunebenheiten ermittelt und/oder charakterisiert die Recheneinrichtung die Fahrbahnunebenheiten weiter unter Berücksichtigung einer Fahrsituation und/oder eines Fahrereignisses. Bei dem Fahrereignis kann es sich etwa um ein Bremsereignis, Beschleunigungsereignis oder Lenkereignis handeln. Bei der Fahrsituation kann etwa die momentane Geschwindigkeit des Kraftfahrzeugs berücksichtigt werden.

Anhand der Fahrsituation oder des Fahrereignisses können Falsch-positive-Detektionen reduziert werden, indem etwa bei einer starken Beschleunigung oder Verzögerung Schwellenwerte zum Erkennen der Bodenunebenheiten erhöht werden, um zu verhindern, dass durch die Beschleunigung oder Verzögerung selbst bereits eine Bodenunebenheit erkannt wird.

Anhand der Fahrsituation oder des Fahrereignisses kann jedoch auch erkannt werden, dass eine Fahrbahnunebenheit zu erwarten ist. Erkennt der Fahrer etwa ein Schlagloch, bremst er üblicherweise ab, sodass das Vorliegen eines Bremsereignisses etwa zu Plausibilisieren der erkannten Bodenunebenheit herangezogen werden kann. So kann beispielsweise eine Wahrscheinlichkeit für das Vorliegen einer bestimmten Bodenunebenheit berechnet werden. Diese wird beim Vorliegen eines Bremsereignisses erhöht.

Gemäß einer weiteren Ausführungsform des Verfahrens zum Ermitteln und Charakterisieren von Fahrbahnunebenheiten ermittelt und/oder charakterisiert die Recheneinrichtung die Fahrbahnunebenheiten unter Verwendung eines Maschinenlernmodells und/oder statistischen Modells, welches von den Sensordaten abhängige Eingangsdaten empfängt.

Die Eingangsdaten können beispielsweise die Sensordaten selbst sein. Die Sensordaten können jedoch auch zuerst vorverarbeitet werden, bevor sie dem Maschinenlernmodell und/oder statistischen Modell bereitgestellt werden.

Das Maschinenlernmodell kann anhand von Trainingsdaten vorab trainiert werden. Gemäß einer Ausführungsform kann vorgesehen sein, dass das Maschinenlernmodell während des Betriebs in Echtzeit Bodenunebenheiten ermittelt und/oder charakterisiert.

Gemäß einer weiteren Ausführungsform des Verfahrens zum Ermitteln und Charakterisieren von Fahrbahnunebenheiten erhält das Maschinenlernmodell einen zeitlichen Verlauf mindestens einer Raddrehzahl und/oder ein Frequenzverhalten der Raddrehzahl als Eingangswerte. Das Maschinenlernmodell gibt eine Größe aus, welche einer Wahrscheinlichkeit des Vorliegens einer Bodenunebenheiten entspricht Das Maschinenlernmodell kann auch trainiert sein, verschiedene Arten und/oder Beschaffenheiten von Bodenunebenheiten zu klassifizieren.

Gemäß einer weiteren Ausführungsform des Verfahrens zum Ermitteln und Charakterisieren von Fahrbahnunebenheiten ist die Recheneinrichtung eine externe Recheneinrichtung, d. h. außerhalb des Kraftfahrzeugs angeordnet. Beispielsweise kann die Auswertung in einer Cloud erfolgten. Die Sensordaten können dabei über eine Schnittstelle des Kraftfahrzeugs an die Recheneinrichtung ausgegeben werden.

Gemäß einer weiteren Ausführungsform des Verfahrens zum Ermitteln und Charakterisieren von Fahrbahnunebenheiten ist die Recheneinrichtung eine interne Recheneinrichtung, d. h. in dem Kraftfahrzeug angeordnet. Beispielsweise ist die Recheneinrichtung eine Steuereinrichtung des Kraftfahrzeugs oder eines Teilsystems des Kraftfahrzeugs. Beispielsweise kann die Recheneinrichtung die Steuereinrichtung eines Antiblockiersystems des Kraftfahrzeugs sein.

Gemäß einer weiteren Ausführungsform ist die Ermittlung und/oder Charakterisierung von Fahrbahnunebenheiten am Rand eines Computer-Netzwerks implementiert (Edge Computing), wobei das Computer-Netzwerk eine beliebige Kombination von elektronischen Steuereinheiten, Kraftfahrzeugcomputern, Verbindungssteuereinheiten und Clouds umfasst In diesem Verbund ist dann auch die Fahrzeugposition als Information verfügbar. In der Kombination mit der erkannten Fahrbahnunebenheit lässt sich dies dann auch Kartieren.

Gemäß einer weiteren Ausführungsform des Verfahrens zum Ermitteln und Charakterisieren von Fahrbahnunebenheiten bei dem Erkennen von Straßenschäden wird eine Information über eine Anzeigeeinrichtung des Kraftfahrzeugs an einen Fahrer des Kraftfahrzeugs ausgegeben. Insbesondere kann die Information das Auftreten der Fahrbahnunebenheit und/oder Details bezüglich der Fahrbahnunebenheit umfassen, etwa eine Art und/oder Beschaffenheit der Fahrbahnunebenheit

Gemäß einer weiteren Ausführungsform des Verfahrens zum Ermitteln und Charakterisieren von Fahrbahnunebenheiten kann die Recheneinrichtung die Sensordaten verschiedener Raddrehzahlsensoren verschiedener Räder miteinander vergleichen. Tritt eine Änderung der Raddrehzahl beispielsweise nur bei den Raddrehzahlsensoren auf einer Seite des Kraftfahrzeugs auf, kann die Recheneinrichtung ermitteln, dass die Fahrbahnunebenheit im Bereich der entsprechenden Seite des Kraftfahrzeugs lokalisiert ist. Die Recheneinrichtung kann dann beispielsweise ein Schlagloch erkennen.

Tritt eine Änderung der Raddrehzahl bei den Raddrehzahlsensoren auf beiden Seiten des Kraftfahrzeugs auf, kann die Recheneinrichtung ermitteln, dass die Fahrbahnunebenheit ausgedehnt ist. Die Recheneinrichtung kann dann beispielsweise eine Geschwindigkeitsschwelle erkennen.

Gemäß einer weiteren Ausführungsform des Verfahrens zum Ermitteln und Charakterisieren von Fahrbahnunebenheiten kann die Recheneinrichtung auch den Lenkwinkel des Kraftfahrzeugs berücksichtigen. Durchfährt das Kraftfahrzeug eine Kurve, überschreitet der Lenkwinkel somit eine vorgegebenen Schwellenwert, und wenn die Recheneinrichtung ermittelt, dass nur einer der Raddrehzahlsensoren der Räder eine signifikante Änderung der Raddrehzahl oberhalb eines Schwellenwert misst, kann die Recheneinrichtung ein Schlagloch erkennen. In diesem Fall ist zu erwarten, dass aufgrund des Lenkwinkels nur ein Rad des Kraftfahrzeugs durch das Schlagloch fährt. Bei einer ausgedehnten Fahrbahnunebenheit werden mehrere Räder eine signifikante Änderung der Raddrehzahl oberhalb eines Schwellenwert messen.

Gemäß einer weiteren Ausführungsform des Verfahrens zum Ermitteln und Charakterisieren von Fahrbahnunebenheiten berechnet die Recheneinrichtung anhand der Sensordaten eine Länge der Fahrbahnunebenheit So kann die Recheneinrichtung aufgrund einer ersten Änderung der Raddrehzahl ein Befahren der Fahrbahnunebenheit erkennen und anhand einer zweiten Änderung der Raddrehzahl ein Verlassen der Fahrbahnunebenheit erkennen. Unter Berücksichtigung der Fahrzeuggeschwindigkeit kann die Recheneinrichtung die Länge der Fahrbahnunebenheit ermitteln. Die Anzahl der Impulsänderungen zwischen dem Zeitpunkt des Befahrens der Fahrbahnunebenheit und dem Verlassen dieser entspricht der Länge z.B. in Zentimeter.

Gemäß einer weiteren Ausführungsform des Verfahrens zum Ermitteln und Charakterisieren von Fahrbahnunebenheiten berechnet die Recheneinrichtung durch Mitteln der Raddrehzahl über einen vorgegebenen Zeitraum eine gemittelte Raddrehzahl. Die Recheneinrichtung ermittelt eine Fahrbahnunebenheit, falls eine Abweichung einer momentanen Raddrehzahl von der gemittelten Raddrehzahl einen Schwellenwert überschreitet.

Gemäß einer weiteren Ausführungsform des Verfahrens zum Ermitteln und Charakterisieren von Fahrbahnunebenheiten berechnet die Recheneinrichtung das Vorliegen der Bodenunebenheiten anhand der von dem mindestens einen Inertialsensor ermittelten Sensordaten. Der Inertialsensor kann einen Drehratensensor und/oder einen Beschleunigungssensor umfassen. Beispielweise kann der Beschleunigungssensor Beschleunigungsmessdaten entlang dreier senkrechter Messachsen ermitteln.

Gemäß einer weiteren Ausführungsform des Verfahrens zum Ermitteln und Charakterisieren von Fahrbahnunebenheiten kann die Recheneinrichtung das Vorliegen der Bodenunebenheiten insbesondere anhand einer vertikalen Beschleunigung ermitteln. Überfährt das Kraftfahrzeugfahrzeug eine Bodenunebenheiten, ändert sich die vertikale Beschleunigung sprungartig. Überschreitet somit die Änderung der vertikalen Beschleunigung einen vorgegebenen Schwellenwert, kann die Recheneinrichtung das Vorliegen der Bodenunebenheit ermitteln. Anhand der Änderung kann die Recheneinrichtung auch die Art und/oder Beschaffenheit der Bodenunebenheit ermitteln. Die Beschleunigungsmessdaten können sowohl von einem zentral im Fahrzeug positionierten Inertialsensor stammen, als auch von radindividuellen Beschleunigungssensoren.

Gemäß einer weiteren Ausführungsform des Verfahrens zum Ermitteln und Charakterisieren von Fahrbahnunebenheiten ermittelt die Recheneinrichtung das Vorliegen der Bodenunebenheiten unter Berücksichtigung der Sensordaten weiterer Sensoren, etwa radindividueller Beschleunigungssensoren, Videosensoren, Lidarsensoren, Radarsensoren und dergleichen. Insbesondere kann die Recheneinrichtung das Vorliegen der Bodenunebenheiten anhand der zusätzlichen Sensordaten plausibilisieren. So kann anhand von Videodaten durch Objekterkennungsmethoden eine Art und/oder Beschaffenheit der Bodenunebenheiten ermittelt werden.

Gemäß einer weiteren Ausführungsform des Verfahrens zum Ermitteln und Charakterisieren von Fahrbahnunebenheiten kann mindestens ein Schwellenwert zum Ermitteln der Fahrbahnunebenheit einstellbar sein. Dazu kann eine Schnittstelle vorgesehen sein, etwa durch bidirektionale Kommunikation zwischen dem Kraftfahrzeug und einer Cloud.

Gemäß einer weiteren Ausführungsform des Verfahrens zum Ermitteln und Charakterisieren von Fahrbahnunebenheiten werden die Daten bezüglich der Fahrbahnunebenheiten zum Erzeugen einer geografischen Karte zusammengeführt. Insbesondere können auf einer Straßenkarte die Fahrbahnunebenheiten und optional die Art und/oder Beschaffenheit der Fahrbahnunebenheiten vermerkt werden. Das Erzeugen der geografischen Karte kann unter Verwendung statistikbasierter und/oder auf maschinellem Lernen basierender Algorithmen in einer Cloud erfolgen. Die geografische Karte kann dynamisch aktualisiert werden.

Gemäß einer weiteren Ausführungsform des Verfahrens zum Ermitteln und Charakterisieren von Fahrbahnunebenheiten können die Sensordaten von internen oder externen Beschleunigungssensoren zur Erkennung von Vibrationen in drei Dimensionen herangezogen werden. Mittels statistischer Verfahren oder maschineller Lernmodelle können Fahrbahnunebenheiten erkannt werden.

### Kurze Beschreibung der Zeichnungen

Es zeigen:
- Figur 1: ein schematisches Blockdiagramm einer Vorrichtung zum Ermitteln und Charakterisieren von Fahrbahnunebenheiten gemäß einer Ausführungsform der Erfindung;
- Figur 2: ein schematisches Blockdiagramm eines Kraftfahrzeugs mit einer erfindungsgemäßen Vorrichtung zum Ermitteln und Charakterisieren von Fahrbahnunebenheiten;
- Figur 3: eine schematische Darstellung zur Erläuterung der Änderung der Raddrehzahl beim Überfahren von Bodenunebenheiten; und
- Figur 4: ein Flussdiagramm eines Verfahrens zum Ermitteln und Charakterisieren von Fahrbahnunebenheiten gemäß einer Ausführungsform der Erfindung.

In allen Figuren sind gleiche bzw. funktionsgleiche Elemente und Vorrichtungen mit denselben Bezugszeichen versehen. Die Nummerierung von Verfahrensschritten dient der Übersichtlichkeit und soll im Allgemeinen keine bestimmte zeitliche Reihenfolge implizieren. Insbesondere können auch mehrere Verfahrensschritte gleichzeitig durchgeführt werden.

### Beschreibung der Ausführungsbeispiele

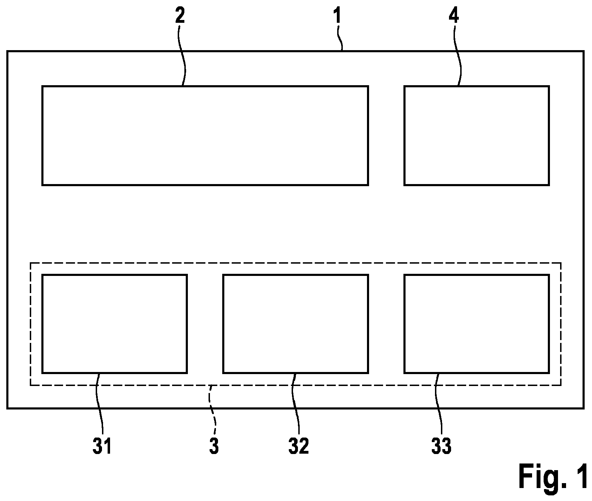

Figur 1 zeigt ein schematisches Blockdiagramm einer Vorrichtung 1 zum Ermitteln und Charakterisieren von Fahrbahnunebenheiten. Die Vorrichtung 1 umfasst eine Schnittstelle 2, welche etwa über einen Kraftfahrzeugkommunikationsbus mit mindestens einem Raddrehzahlsensor und alternativ zusätzlich mindestens einem Beschleunigungssensor gekoppelt ist. Die Vorrichtung 1 kann weiter mit verschiedenen internen Sensoren eines Bremssystems des Kraftfahrzeugs verbunden sein. Zusätzlich können auch systemexterne Sensoren angeschlossen werden, z. B. über den Kraftfahrzeugkommunikationsbus.

Die Schnittstelle 2 kann auch eine drahtlose Verbindung sein, um mit dem Kraftfahrzeug gekoppelt zu sein. Die Vorrichtung 1 kann somit entweder in dem Kraftfahrzeug angeordnet sein oder auch eine externe Vorrichtung sein.

Die Vorrichtung 1 umfasst weiter eine Recheneinrichtung 3, welche anhand der über die Schnittstelle 2 empfangenen Sensordaten Fahrbahnunebenheiten ermittelt. Die Recheneinrichtung 3 kann einen oder mehrere elektronische Prozessoren umfassen, etwa einen programmierbaren Mikroprozessor, Mikrocontroller oder dergleichen. Weiter umfasst die Vorrichtung 1 einen nicht-transitorischen, maschinenlesbaren Speicher 4, um die empfangenen Sensordaten zu speichern. Die Recheneinrichtung 3 kann den Speicher 4 lesen und beschreiben.

Die Recheneinrichtung 3 kann eine erste Einheit 31 zur Datenerfassung, eine zweite Einheit 32 zur Vorverarbeitung der Sensordaten und eine dritte Einheit 33 zur Ermittlung der Fahrbahnunebenheiten umfassen. Die ersten bis dritten Einheiten 31 bis 33 können als separate elektronische Prozessoren ausgestaltet sein oder auch durch denselben elektronischen Prozessor oder eine Kombination elektronischer Prozessoren implementiert sein.

In der Phase der Datenerfassung erfasst die Vorrichtung 1 die Signale von dem mindestens einen Sensor nahezu in Echtzeit. Die von der mindestens einen Sensor empfangenen Daten liegen im Rohformat vor, wie z.B. Drehzahlimpulse von den Raddrehzahlsensoren. Diese Signale werden über die Schnittstelle 2 erfasst und von der ersten Einheit 31 beispielsweise in den Speicher 4 geschrieben.

In der Vorverarbeitungsphase werden die rohen Sensordaten durch die zweite Einheit 32 bereinigt und verarbeitet, um hochfrequente Raddrehzahldaten zu berechnen.

In der Phase der Berechnung des Modellalgorithmus werden die hochfrequenten Raddrehzahldaten von der dritten Einheit 33 verwendet, um die Fahrbahnunebenheiten zu erkennen. Die dritte Einheit 33 kann etwa aufgrund feinkalibrierter Schwellenwerte eines Modells die Straßenrauigkeit von Schlaglöchern und Bodenwellen unterscheiden. Außerdem kann die Art und/oder Beschaffenheit der Fahrbahnunebenheiten erkannt werden. Insbesondere werden Tiefe und/oder Länge und/oder Breite der Fahrbahnunebenheiten erkannt und ausgegeben.

Die Informationen können über die Schnittstelle 2 ausgegeben werden, etwa an weitere Recheneinrichtungen des Kraftfahrzeugs oder an eine externe Cloud.

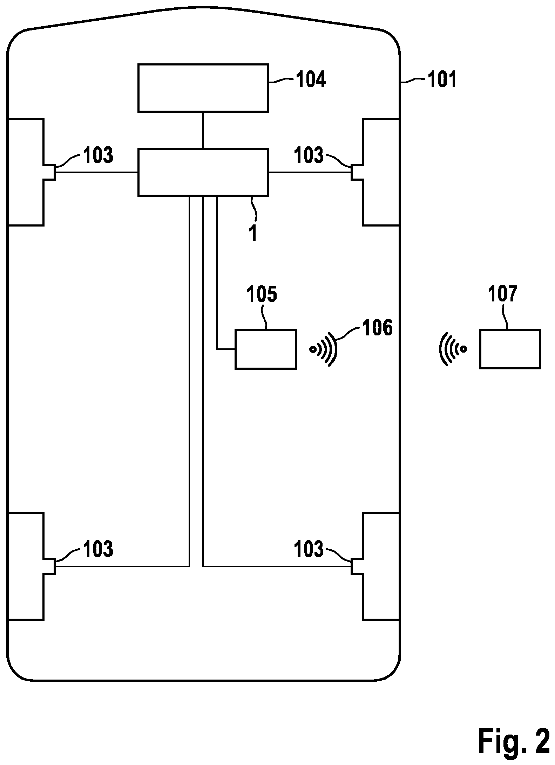

Figur 2 zeigt ein schematisches Blockdiagramm eines Kraftfahrzeugs 101 mit einer in Figur 1 beschriebenen Vorrichtung 1 zum Ermitteln und Charakterisieren von Fahrbahnunebenheiten. An den Rädern des Kraftfahrzeugs 101 ist jeweils ein Raddrehzahlsensor 103 angeordnet, welche fest verdrahtet oder alternativ über den Kraftfahrzeug-Bus mit der Vorrichtung 1 und einem Kraftfahrzeugcomputer 104 verbunden sind. Die Vorrichtung 1 kann dabei ein elektronisches Steuergerät des Kraftfahrzeugs 101 sein.

Die Vorrichtung 1 ermittelt unter Verwendung der von den Raddrehzahlsensor 103 empfangenen Informationen eine Kraftfahrzeuggeschwindigkeit, einen Kilometerstand, einen Schlupf usw. Weiter ermittelt die Vorrichtung 1, wie oben beschrieben, die Fahrbahnunebenheiten.

Alternativ kann auch der Kraftfahrzeugcomputer 104 zum Ermitteln und Charakterisieren der Fahrbahnunebenheiten ausgebildet sein.

Die Informationen bezüglich der Fahrbahnunebenheiten können über einen Kommunikationsbus des Kraftfahrzeugs 101 weiter an eine Einrichtung 105 zur Kommunikation mit anderen Kraftfahrzeugen oder anderen externen Vorrichtungen (V2X-Einrichtung) gesendet werden. Diese Einrichtung 105 kann die Informationen speichern und/oder über einen drahtlosen Kommunikationskanal 106 an eine Cloud-Infrastruktur 107 übertragen. Der drahtlose Kommunikationskanal 206 kann z. B. ein Mobilfunknetz, eine Wi-Fi-Schnittstelle, eine Bluetooth-Schnittstelle usw. umfassen.

In der Cloud-Infrastruktur 107 können die Daten dann verwaltet, bereinigt, verarbeitet und visualisiert werden. Die Daten können etwa weiterverarbeitet werden, um eine geografische Karte zu erstellen, auf der die Informationen zu den Fahrbahnunebenheiten visualisiert werden. Es kann auch eine Tabelle oder ein Bericht über Schlaglöcher und Straßenunebenheiten erzeugt werden.

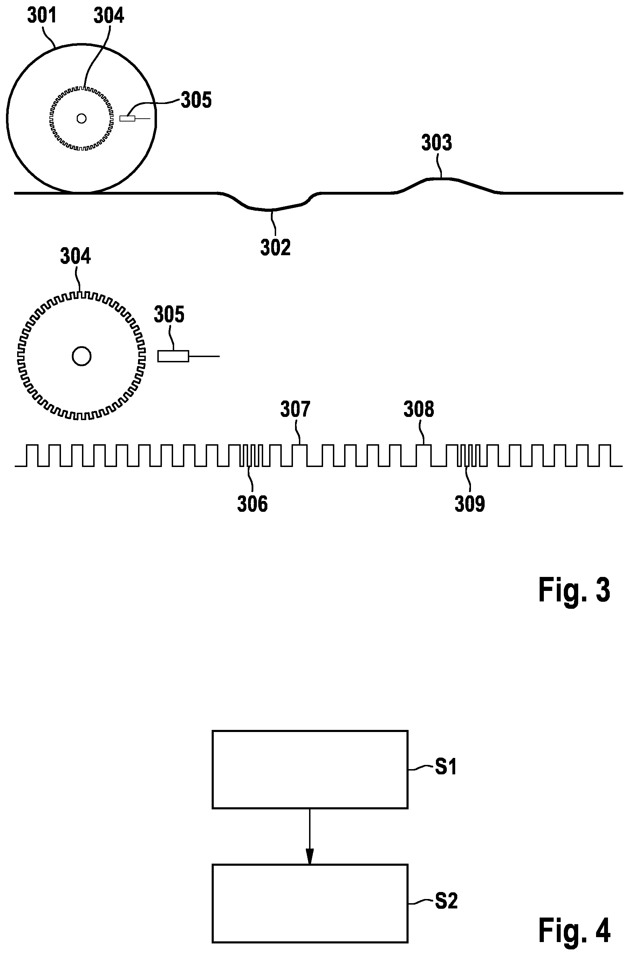

Figur 3 zeigt eine schematische Darstellung zur Erläuterung der Änderung der Raddrehzahl beim Überfahren von Bodenunebenheiten 302, 303 durch ein Kraftfahrzeug. Ein Raddrehzahlsensor ermittelt dabei die Raddrehzahl des Rades 301 mit Hilfe des Inkrementalgeberprinzips.

Ein Sensorelement 305 des Raddrehzahlsensors, etwa ein Hallsensor, ein anisotroper-magnetoresistiver-Effekt (AMR)-Sensor, eine Riesenmagnetowiderstand (GMR)-Sensor oder dergleichen, wird dem sich ändernden Magnetfeld eines rotierenden Encoders 304 ausgesetzt, der an einer Achse des Rades 301 montiert ist.

Die erfassten Änderungen des magnetischen Flusses werden als Drehzahlimpulse an die Recheneinrichtung 1 übermittelt. Die Recheneinrichtung 1 misst die Zeitdifferenzen zwischen benachbarten Drehzahlimpulsen und errechnet daraus (zusammen mit weiteren Kalibrierungsparametern, etwa der Anzahl der Impulse pro Umdrehung und dem Radumfang) die momentane hochfrequente Raddrehzahl. Beim Einfahren und Verlassen eines Schlaglochs 302 oder einer Fahrbahnschwelle 303 tritt eine plötzliche Abweichung der momentanen hochfrequenten Raddrehzahl auf. Dies ist darauf zurückzuführen, dass das Rad 301 bei der Einfahrt in das Schlagloch 302 einen plötzlichen Anstieg 306 der Raddrehzahl erfährt. Umgekehrt erfährt das Rad 301 eine plötzliche Abnahme 307 der Drehzahl beim Verlassen des Schlaglochs 302.

Beim der Fahrbahnschwelle 303 verhält es sich umgekehrt, das heißt das Rad 301 erfährt bei der Einfahrt auf die Fahrbahnschwelle 303 eine plötzliche Abnahme 308 der Raddrehzahl. Umgekehrt erfährt das Rad 301 einen plötzlichen Anstieg 309 der Drehzahl beim Verlassen der Fahrbahnschwelle 303.

Die Amplitude der Abweichung (Wavelet-Amplitude) ist ein Maß für die Tiefe des Schlaglochs 302 bzw. der Höhe der Fahrbahnschwelle 303, und die Anzahl der Impulse zwischen Einfahrt und Ausfahrt entspricht einer Strecke, die die Länge des Schlaglochs darstellt.

Figur 4 zeigt ein Flussdiagramm eines Verfahrens zum Ermitteln und Charakterisieren von Fahrbahnunebenheiten. Das Verfahren kann mit der oben beschriebenen Vorrichtung 1 durchgeführt werden. Umgekehrt kann die Vorrichtung 1 zur Durchführung der im Folgenden beschriebenen Verfahrensschritte ausgebildet sein.

In einem ersten Verfahrensschritt S1 werden Sensordaten durch mindestens einen Raddrehzahlsensor 103 und alternativ zusätzlich mindestens einen Beschleunigungssensor eines auf der Fahrbahn fahrenden Kraftfahrzeugs 101 erzeugt.

In einem zweiten Verfahrensschritt S2 ermittelt und charakterisiert eine Recheneinrichtung 3 unter Verwendung der erzeugten Sensordaten eine Fahrbahnunebenheit. Die Recheneinrichtung 3 kann hierzu einen zeitlichen Verlauf der Raddrehzahl ermitteln. Zu Beginn der Fahrbahnunebenheit kann die Recheneinrichtung 3 insbesondere eine zeitliche Änderung der Raddrehzahl berechnen. Überschreitet diese einen Schwellenwert, wird die Fahrbahnunebenheit erkannt.

Die Recheneinrichtung 3 kann auch ein Frequenzverhalten der Raddrehzahl berechnen und heranziehen, um die Fahrbahnunebenheit zu ermitteln.

Es kann auch anhand der Sensordaten eines Beschleunigungssensors eine Beschleunigung ermittelt werden. Insbesondere kann eine vertikale Beschleunigung berechnet werden. Überschreitet eine Änderung der vertikalen Beschleunigung einen vorgegebenen Schwellenwert, wird die Fahrbahnunebenheit erkannt.

Das Ermitteln der Fahrbahnunebenheiten erfolgt mit einem Modellalgorithmus, welcher die Verarbeitung der rohen Sensordaten als Eingabe, die Ermittlung der momentanen hochfrequenten Raddrehzahl und die Überwachung dieser Raddrehzahl umfassen kann.

Weiter kann die Recheneinrichtung 3 eine Art und/oder Beschaffenheit der Fahrbahnunebenheit ermitteln. So kann aufgrund einer ersten Änderung der Raddrehzahl ein Befahren der Fahrbahnunebenheit erkannt werden und anhand einer zweiten Änderung der Raddrehzahl kann ein Verlassen der Fahrbahnunebenheit erkannt werden.

Unter Berücksichtigung der Fahrzeuggeschwindigkeit kann die Länge der Fahrbahnunebenheit ermittelt werden, indem die Anzahl der Impulse im Zeitraum zwischen dem Befahren und dem Verlassen der Fahrbahnunebenheit ermittelt wird.

Weiter kann die Tiefe der Fahrbahnunebenheit ermittelt werden, etwa indem die Amplitude der Änderung der Raddrehzahl ermittelt wird. Die Tiefe ist beispielsweise proportional zur Amplitude oder kann anhand einer Kalibrierung eingelernt werden.

Weiter kann eine Breite ermittelt werden, etwa indem erkannt wird, ob bei jedem Rad oder nur bei bestimmten Rädern die Fahrbahnunebenheit erkannt wird.

Die Fahrbahnunebenheit kann auch unter Verwendung eines Maschinenlernmodells und/oder statistischen Modells erfolgen.

Weiter können die Informationen bezüglich der Fahrbahnunebenheit an eine Cloud ausgegeben werden. Anhand dieser Informationen kann eine geografische Karte erstellt werden, in welcher die Fahrbahnunebenheiten verzeichnet sind.

Das Ermitteln der Fahrbahnunebenheit kann fahrzeugintern erfolgen, etwa durch Berechnung in einer Steuereinrichtung eines Antiblockiersystems des Kraftfahrzeugs 101. Das Ermitteln der Fahrbahnunebenheit kann jedoch auch zumindest teilweise außerhalb des Kraftfahrzeugs 101 erfolgen, etwa in der Cloud.

## Patentansprüche

1. Verfahren zum Ermitteln und Charakterisieren von Fahrbahnunebenheiten einer Fahrbahn, mit den Schritten:
Erzeugen (S1) von Sensordaten durch mindestens einen Raddrehzahlsensor (103) und optional zusätzlich mindestens einen Beschleunigungssensor eines auf der Fahrbahn fahrenden Kraftfahrzeugs (101); und
Ermitteln und Charakterisieren (S2) der Fahrbahnunebenheiten durch eine Recheneinrichtung (3) unter Verwendung der erzeugten Sensordaten, wobei das Charakterisieren der Fahrbahnunebenheit das Ermitteln von zumindest einem von einer Länge, Breite und Tiefe der Fahrbahnunebenheit umfasst;
wobei der Raddrehzahlsensor (103) in Abhängigkeit von einer Bewegung eines an einem Rad des Kraftfahrzeugs (101) angeordneten Impulsrades Impulse erfasst, **dadurch gekennzeichnet, dass** beidie Recheneinrichtung (3) anhand von Änderungen der erfassten Impulse in Abhängigkeit von der Zeit einen winkelförmigen Verlauf der Raddrehzahl ermittelt, wobei die Recheneinrichtung (3) die Fahrbahnunebenheiten anhand des ermittelten winkelförmigen Verlaufs der Raddrehzahl erkennt, und wobei der winkelförmige Verlauf der Raddrehzahl eine Änderung der Raddrehzahl in Abhängigkeit von einem Winkel ist.

2. Verfahren nach Anspruch 1, wobei die Recheneinrichtung (3) Fahrbahnunebenheiten ermittelt, falls ein Betrag einer winkelförmigen Änderung der Raddrehzahl einen Schwellenwert überschreitet.

3. Verfahren nach einem der vorangehenden Ansprüche, wobei die Recheneinrichtung (3) anhand der von dem Raddrehzahlsensor (103) erzeugten Sensordaten ein Frequenzverhalten der Raddrehzahl berechnet, und wobei die Recheneinrichtung (3) die Fahrbahnunebenheiten anhand des berechneten Frequenzverhaltens der Raddrehzahl ermittelt.

4. Verfahren nach einem der vorangehenden Ansprüche, wobei die Recheneinrichtung (3) zum Charakterisieren der Fahrbahnunebenheiten weiter eine Art und/oder Beschaffenheit der Fahrbahnunebenheiten anhand der Sensordaten bestimmt.

5. Verfahren nach einem der vorangehenden Ansprüche, wobei das Charakterisieren der Fahrbahnunebenheit das Ermitteln einer Tiefe und/oder Höhe der Fahrbahnunebenheit anhand einer Amplitude einer Änderung der Raddrehzahl und/oder anhand einer Amplitude einer Änderung einer von dem mindestens einen Beschleunigungssensor gemessenen Vertikalbeschleunigung umfasst.

6. Verfahren nach einem der vorangehenden Ansprüche, wobei das Charakterisieren der Fahrbahnunebenheit anhand der Sensordaten des mindestens einen Raddrehzahlsensors (103) erfolgt, und wobei ein Ergebnis des Charakterisierens der Fahrbahnunebenheit anhand der Sensordaten des mindestens einen Beschleunigungssensors plausibilisiert wird.

7. Verfahren nach einem der vorangehenden Ansprüche, wobei der Raddrehzahlsensor (103) in Abhängigkeit von einer Bewegung eines an einem Rad des Kraftfahrzeugs (101) angeordneten Impulsrades Impulse erfasst, und wobei das Charakterisieren der Fahrbahnunebenheit das Ermitteln einer Länge der Fahrbahnunebenheit anhand einer Anzahl von Änderungen der Impulse im Zeitraum zwischen Befahren und Verlassen der Fahrbahnunebenheiten umfasst.

8. Verfahren nach einem der vorangehenden Ansprüche, wobei das Ermitteln der Fahrbahnunebenheit das Ermitteln einer Position der Fahrbahnunebenheit relativ zu einem Referenzpunkt des Kraftfahrzeugs (101) anhand einer Einzelradauswertung umfasst.

9. Verfahren nach einem der vorangehenden Ansprüche, wobei die Recheneinrichtung (3) die Fahrbahnunebenheiten weiter unter Berücksichtigung einer Fahrsituation oder eines Fahrereignisses ermittelt und/oder charakterisiert, insbesondere eines Bremsereignisses, Beschleunigungsereignisses, eines Lenkereignisse und einer Geschwindigkeit des Kraftfahrzeugs (101).

10. Verfahren nach einem der vorangehenden Ansprüche, wobei die Recheneinrichtung (3) die Fahrbahnunebenheiten unter Verwendung eines Maschinenlernmodells und/oder statistischen Modells ermittelt und/oder charakterisiert, welches von den Sensordaten abhängige Eingangsdaten empfängt.

11. Verfahren nach einem der vorangehenden Ansprüche, wobei die Recheneinrichtung (3) eine bezüglich des Kraftfahrzeugs (101) externe Recheneinrichtung (3) ist; und wobei die Sensordaten über eine Schnittstelle (106) des Kraftfahrzeugs (101) an die Recheneinrichtung (3) ausgegeben werden.

12. Verfahren nach einem der vorangehenden Ansprüche, wobei die Recheneinrichtung (3) eine Steuereinrichtung eines Antiblockiersystems des Kraftfahrzeugs (101) ist.

13. Vorrichtung (1) zum Ermitteln und Charakterisieren von Fahrbahnunebenheiten einer Fahrbahn, mit:
einer Schnittstelle (2), welche dazu ausgebildet ist, erzeugte Sensordaten von mindestens einem Raddrehzahlsensor (103) und optional zusätzlich mindestens einem Beschleunigungssensor eines auf der Fahrbahn fahrenden Kraftfahrzeugs (101) zu empfangen; und
eine Recheneinrichtung (3), welche dazu ausgebildet ist, die Fahrbahnunebenheiten unter Verwendung der erzeugten Sensordaten zu ermitteln und zu charakterisieren, wobei das Charakterisieren der Fahrbahnunebenheit das Ermitteln von zumindest einem von einer Länge, Breite und Tiefe der Fahrbahnunebenheit umfasst;
wobei der Raddrehzahlsensor (103) dazu ausgebildet ist, in Abhängigkeit von einer Bewegung eines an einem Rad des Kraftfahrzeugs (101) angeordneten Impulsrades Impulse zu erfassen; **dadurch gekennzeichnet, dass**
wobeidie Recheneinrichtung (3) dazu ausgebildet ist, anhand von Änderungen der erfassten Impulse in Abhängigkeit von der Zeit einen winkelförmigen Verlauf der Raddrehzahl zu ermitteln, und die Fahrbahnunebenheiten anhand des ermittelten winkelförmigen Verlaufs der Raddrehzahl zu erkennen, wobei der winkelförmige Verlauf der Raddrehzahl eine Änderung der Raddrehzahl in Abhängigkeit von einem Winkel ist.

## Claims

1. Method for identifying and characterizing road bumps in a road, comprising the steps of:
generating (S1) sensor data by way of at least one wheel speed sensor (103) and optionally additionally at least one acceleration sensor of a motor vehicle (101) travelling on the road; and
identifying and characterizing (S2) the road bumps by way of a computing device (3) using the generated sensor data, characterization of the road bump comprising determination of at least one from a length, a width and a depth of the road bump;
the wheel speed sensor (103) detecting pulses on the basis of a movement of a pulse wheel arranged on a wheel of the motor vehicle (101),
**characterized in that**
the computing device (3) takes changes in the detected pulses as a function of time as a basis for determining an angular characteristic of the wheel speed, the computing device (3) detecting the road bumps on the basis of the determined angular characteristic of the wheel speed, and the angular characteristic of the wheel speed being a change in the wheel speed as a function of an angle.

2. Method according to Claim 1, wherein the computing device (3) identifies road bumps if an absolute value of an angular change in the wheel speed exceeds a threshold value.

3. Method according to either of the preceding claims, wherein the computing device (3) takes the sensor data generated by the wheel speed sensor (103) as a basis for computing a frequency response of the wheel speed, and wherein the computing device (3) identifies the road bumps on the basis of the computed frequency response of the wheel speed.

4. Method according to one of the preceding claims, wherein to characterize the road bumps the computing device (3) furthermore determines a type and/or nature of the road bumps on the basis of the sensor data.

5. Method according to one of the preceding claims, wherein characterization of the road bump comprises determination of a depth and/or a height of the road bump on the basis of an amplitude of a change in the wheel speed and/or on the basis of an amplitude of a change in a vertical acceleration measured by the at least one acceleration sensor.

6. Method according to one of the preceding claims, wherein the road bump is characterized on the basis of the sensor data of the at least one wheel speed sensor (103), and wherein a result of characterization of the road bump is plausibility checked on the basis of the sensor data of the at least one acceleration sensor.

7. Method according to one of the preceding claims, wherein the wheel speed sensor (103) detects pulses on the basis of a movement of a pulse wheel arranged on a wheel of the motor vehicle (101), and wherein characterization of the road bump comprises determination of a length of the road bump on the basis of a number of changes in the pulses in the period of time between the road bumps' being driven over and left.

8. Method according to one of the preceding claims, wherein identification of the road bump comprises determination of a position of the road bump in relation to a reference point of the motor vehicle (101) on the basis of an individual-wheel evaluation.

9. Method according to one of the preceding claims, wherein the computing device (3) furthermore identifies and/or characterizes the road bumps in consideration of a driving situation or a driving event, in particular a braking event, an acceleration event, a steering event and a speed of the motor vehicle (101).

10. Method according to one of the preceding claims, wherein the computing device (3) identifies and/or characterizes the road bumps using a machine learning model and/or a statistical model that receives input data dependent on the sensor data.

11. Method according to one of the preceding claims, wherein the computing device (3) is a computing device (3) that is external to the motor vehicle (101); and wherein the sensor data are output to the computing device (3) via an interface (106) of the motor vehicle (101).

12. Method according to one of the preceding claims, wherein the computing device (3) is a control device of an anti-lock braking system of the motor vehicle (101).

13. Device (1) for identifying and characterizing road bumps in a road, comprising:
an interface (2) designed to receive generated sensor data from at least one wheel speed sensor (103) and optionally additionally at least one acceleration sensor of a motor vehicle (101) travelling on the road;
and
a computing device (3) designed to identify and characterize the road bumps using the generated sensor data, characterization of the road bump comprising determination of at least one from a length, a width and a depth of the road bump;
the wheel speed sensor (103) being designed to detect pulses on the basis of a movement of a pulse wheel arranged on a wheel of the motor vehicle (101);
**characterized in that**
the computing device (3) is designed to take changes in the detected pulses as a function of time as a basis for determining an angular characteristic of the wheel speed, and to detect the road bumps on the basis of the determined angular characteristic of the wheel speed, the angular characteristic of the wheel speed being a change in the wheel speed as a function of an angle.

## Revendications

1. Procédé pour déterminer et caractériser des irrégularités de chaussée d'une chaussée, comprenant les étapes suivantes :
génération (S1) de données de capteur par au moins un capteur de vitesse de rotation de roue (103) et, en option, en supplément par au moins un capteur d'accélération d'un véhicule automobile (101) roulant sur la chaussée ; et
détermination et caractérisation (S2) des irrégularités de la chaussée par un système de calcul (3) en utilisant les données de capteur générées, la caractérisation de l'irrégularité de la chaussée comprenant la détermination d'au moins un élément parmi une longueur, une largeur et une profondeur de l'irrégularité de la chaussée,
le capteur de vitesse de rotation de roue (103) détectant des impulsions en fonction d'un mouvement d'une roue à impulsions disposée sur une roue du véhicule automobile (101),
**caractérisé en ce que**
le système de calcul (3) détermine, à l'aide de variations des impulsions détectées en fonction du temps, un tracé angulaire de la vitesse de rotation de roue, le système de calcul (3) identifiant les irrégularités de la chaussée à l'aide du tracé angulaire déterminé de la vitesse de rotation de roue, et le tracé angulaire de la vitesse de rotation de roue étant une variation de la vitesse de rotation de roue en fonction d'un angle.

2. Procédé selon la revendication 1, le système de calcul (3) déterminant des irrégularités de la chaussée, si une valeur d'une variation angulaire de la vitesse de roue dépasse une valeur de seuil.

3. Procédé selon l'une des revendications précédentes, le système de calcul (3) calculant une réponse en fréquence de la vitesse de rotation de roue à l'aide des données de capteur générées par le capteur de vitesse de rotation de roue (103), et le système de calcul (3) déterminant les irrégularités de la chaussée à l'aide de la réponse en fréquence calculée de la vitesse de rotation de roue.

4. Procédé selon l'une des revendications précédentes, le système de calcul (3) définissant pour caractériser les irrégularités de la chaussée par ailleurs un type et/ou une nature des irrégularités de la chaussée à l'aide des données de capteur.

5. Procédé selon l'une des revendications précédentes, la caractérisation de l'irrégularité de la chaussée comprenant la détermination d'une profondeur et/ou d'une hauteur de l'irrégularité de la chaussée à l'aide d'une amplitude d'une variation de la vitesse de rotation de roue et/ou à l'aide d'une amplitude d'une variation d'une accélération verticale mesurée par l'au moins un capteur d'accélération.

6. Procédé selon l'une des revendications précédentes, la caractérisation de l'irrégularité de la chaussée étant effectuée à l'aide des données de capteur de l'au moins un capteur de vitesse de rotation de roue (103), et un résultat de la caractérisation de l'irrégularité de la chaussée étant plausibilisé à l'aide des données de capteur de l'au moins un capteur d'accélération.

7. Procédé selon l'une des revendications précédentes, le capteur de vitesse de rotation de roue (103) détectant des impulsions en fonction d'un mouvement d'une roue à impulsions disposée sur une roue du véhicule automobile (101), et la caractérisation de l'irrégularité de la chaussée comprenant la détermination d'une longueur de l'irrégularité de la chaussée à l'aide d'un nombre de variations des impulsions dans la période entre le roulage sur les irrégularités de la chaussée et la sortie de celles-ci.

8. Procédé selon l'une des revendications précédentes, la détermination de l'irrégularité de la chaussée comprenant la détermination d'une position de l'irrégularité de la chaussée par rapport à un point de référence du véhicule automobile (101) à l'aide d'une évaluation individuelle des roues.

9. Procédé selon l'une des revendications précédentes, le système de calcul (3) déterminant et/ou caractérisant les irrégularités de la chaussée par ailleurs en tenant compte d'une situation de conduite ou d'un événement de conduite, en particulier d'un événement de freinage, d'un événement d'accélération, d'un événement de braquage et d'une vitesse du véhicule automobile (101).

10. Procédé selon l'une des revendications précédentes, le système de calcul (3) déterminant les irrégularités de la chaussée en utilisant un modèle d'apprentissage automatique et/ou un modèle statistique, lequel reçoit des données d'entrée dépendantes des données de capteur.

11. Procédé selon l'une des revendications précédentes, le système de calcul (3) étant un système de calcul externe (3) par rapport au véhicule automobile (101) ; et les données de capteur étant fournies par une interface (106) du véhicule automobile (101) au système de calcul (3).

12. Procédé selon l'une des revendications précédentes, le système de calcul (3) étant un système de commande d'un système antiblocage du véhicule automobile (101).

13. Dispositif (1) pour déterminer et caractériser des irrégularités de chaussée d'une chaussée, comprenant :
une interface (2) qui est formée pour recevoir des données de capteur générées d'au moins un capteur de vitesse de rotation de roue (103) et en option en supplément d'au moins un capteur d'accélération d'un véhicule automobile (101) roulant sur la chaussée ;
et
un système de calcul (3), lequel est formé pour déterminer et caractériser les irrégularités de la chaussée en utilisant les données de capteur générées, la caractérisation de l'irrégularité de la chaussée comprenant la détermination d'au moins un élément parmi une longueur, une largeur et une profondeur de l'irrégularité de la chaussée ;
le capteur de vitesse de rotation de roue (103) étant formé pour détecter des impulsions en fonction d'un mouvement d'une roue d'impulsions disposée sur une roue du véhicule automobile (101), **caractérisé en ce que** le système de calcul (3) est formé pour déterminer, à l'aide de variations des impulsions détectées en fonction du temps, un tracé angulaire de la vitesse de rotation de roue, et pour identifier les irrégularités de la chaussée à l'aide du tracé angulaire de la vitesse de rotation de roue, le tracé angulaire de la vitesse de rotation de roue étant une variation de la vitesse de rotation de roue en fonction d'un angle.
